# EUROPÄISCHE PATENTSCHRIFT

(11) **EP 1 267 464 B1**
(45) Veröffentlichungstag und Bekanntmachung des Hinweises auf die Patenterteilung: **24.08.2005**
(21) Anmeldenummer: 01810560.1
(22) Anmeldetag: 11.06.2001
(51) Int. Cl.: H02G 5/00

(54) **Isolator für ein elektrisches Verschienungssystem sowie ein Isolatorsystem mit solchen Isolatoren**
Insulator for electrical bus system, and insulating system making use of such insulators
Isolateur pour système de barres électriques, et assemblage d'isolation faisant usage de tels isolateurs

(43) Veröffentlichungstag der Anmeldung: 18.12.2002
(73) Patentinhaber: ABB Schweiz AG, 5400 Baden (CH)
(72) Erfinder: Rees, Jochen, 79761 Waldshut-Tiengen (DE); Maier, Peter, 79737 Herrischried (DE)
(74) Vertreter: ABB Patent Attorneys

(56) Entgegenhaltungen:
- EP-A- 0 877 460
- US-A- 4 627 680

## Beschreibung

### Technisches Gebiet

Die vorliegende Erfindung bezieht sich auf das Gebiet der Isolationstechnik und der Stromleitertechnik. Sie betrifft einen Isolator für ein elektrisches Verschienungssystem sowie ein Isolatorsystem mit mindestens zwei solcher Isolatoren gemäss dem Oberbegriff der unabhängigen Ansprüche 1 und 8 (Siehe US-A-4 627 680).

### Stand der Technik

Isolatoren für elektrische Verschienungssysteme werden heute in einer Fülle von leistungselektronischen Schaltungen, insbesondere in Stromrichterschaltungen, zur Isolation von stromführenden Schienen gegeneinander und gegen Erdpotential eingesetzt. Gängigerweise weist ein solches elektrisches Verschienungssystem mindestens eine einen elektrischen Strom führende Schiene auf, die gegenüber dem Erdpotential auf einem unterschiedlichen Spannungspotential liegt. Bei einem Verschienungssystem mit zwei oder mehr Schienen liegen die einzelnen Schienen auf unterschiedlichen Spannungspotentialen. Zur niederinduktiven Verbindung beispielsweise zwischen den Leistungsschaltern einer Stromrichterschaltung und einem Energiespeicher dieser Stromrichterschaltung, insbesondere einem Gleichspannungszwischenkreis, werden die Schienen eng aneinander geführt, wobei zu deren Isolation gegeneinander und gegen Erdpotential bekannte Isolatoren eingesetzt werden. Ein solcher Isolator ist als axialsymmetrischer Isolatorkörper ausgebildet, der ein längs der Symmetrieachsrichtung geführtes Loch aufweist. Weiterhin ist eine bezüglich der Symmetrieachse jeweils an den Stirnseiten des Körpers zu dem Loch senkrecht beabstandete und sich radial bis zum Randbereich des Körpers erstreckende Aufnahmefläche zur flächigen Kontaktierung einer Schiene vorgesehen. Ferner weist der Körper einen mehrteiligen Aufbau aus Teilisolatorkörpern auf, die in Symmetrieachsrichtung gestapelt sind. Dadurch wird eine ausreichend grosse Kriechstrecke in Symmetrieachsrichtung zur Isolation zweier Schienen gegeneinander erreicht. Jeder Teilisolatorkörper ist aus einem mehrschichtigen, insbesondere glasfaserverstärkten Isolationsmaterial, wie beispielsweise HM35 aufgebaut.

Problematisch bei einem derartigen mehrteiligen Aufbau ist, dass zur Erreichung einer ausreichend grossen Kriechstrecke in Symmetrieachsrichtung eine Vielzahl an Teilisolatorkörpern notwendig sind. Ein solcher aus Teilisolatorkörpern aufgebauter Körper erfordert jedoch ein erhebliches Mass an Platz und ist anfällig gegen mechanische Einwirkungen, insbesondere Knickbeanspruchungen, quer zur Symmetrieachsrichtung. Derartige mechanische Einwirkungen treten beispielsweise im Stromstossfall einer stromführenden Schiene auf, die eng an einer anderen Schiene oder nahe dem Erdpotential geführt ist und durch den Körper von der anderen Schiene oder dem Erdpotential beabstandet ist. Dadurch kann es zu Teilentladungen zwischen den Teilisolatorkörpern und zu Überschlägen zwischen den Schienen oder zwischen einer Schiene und dem Erdpotential kommen, wobei der Körper beschädigt oder zerstört werden kann. Ein ausreichendes Mass an Isolationsvermögen des Isolators ist dann nicht mehr gewährleistet. Zudem ist der mehrteilige Aufbau des vorstehend beschriebenen Isolators sehr montage- und wartungsintensiv.

Gängigerweise verläuft eine Erdpotentialschiene durch das Loch des Körpers. Um eine ausreichend grosse Kriechstrecke zwischen dieser Erdpotentialschiene und einer auf der Aufnahmefläche liegenden Schiene zu erzielen, ist in der aufliegenden Schiene eine Aussparung in Symmetrieachsrichtung vorgesehen, die um ein Vielfaches grösser ist, als das Loch des Körpers, damit die für die Isolation zwischen der aufliegenden Schiene und der Erdpotentialschiene notwendige Kriechstrecke eingehalten ist. Bei einer hohen über eine solche Schiene zu übertragende Leistung muss aber die Schiene flächenmässig sehr gross dimensioniert werden, um den zu der hohen Leistung korrelierenden hohen Strom führen zu können. Eine derart dimensionierte Schiene bedingt aber einen hohen Platzbedarf, ist materialintensiv und damit teuer. Weiterhin bedingt eine derart dimensionierte Schiene mehrere Isolatoren nebeneinander, wodurch weitere Materialkosten, insbesondere Bauteilkosten entstehen.

Desweiteren eignet sich der vorstehend beschriebene Isolator nicht zum Aufbau eines Isolatorsystems aus mehreren Körpern, da die vorstehend erwähnten auftretenden mechanischen Einwirkungen zu einer mechanischen Instabilität des Isolatorsystems führen können, wobei das Isolatorsystem beschädigt oder zerstört werden kann. Zudem erfordert ein aus mehreren des vorstehend beschriebenen Isolators aufgebautes Isolatorsystem ein erhebliches Mass an Platz.

### Darstellung der Erfindung

Aufgabe der Erfindung ist es deshalb, einen Isolator für ein elektrisches Verschienungssystem mit mindestens einer Schiene anzugeben, der sich durch ein hohes Mass an Isolationsvermögen und Teilentladungs- und Durchschlagsfestigkeit auszeichnet und einen besonders einfachen, robusten sowie platzsparenden und damit kostengünstigen Aufbau aufweist. Ferner ist ein Isolatorsystem anzugeben, welches mindestens zwei erfindungsgemässe Isolatoren umfasst und einen platzsparenden Aufbau aufweist sowie weitestgehend resistent gegenüber mechanischen Einwirkungen ist. Diese Aufgaben werden durch die Merkmale des Anspruchs 1 und 8 gelöst. In den Unteransprüchen sind vorteilhafte Weiterbildungen der Erfindung angegeben.

Der erfindungsgemässe Isolator ist als axialsymmetrischer Körper ausgebildet und weist ein längs der Symmetrieachse geführtes Loch auf, wobei bezüglich der Symmetrieachse jeweils an Stirnseiten des Körpers eine zu dem Loch senkrecht beabstandete und sich radial bis zum Randbereich des Körpers erstreckende Aufnahmefläche zur flächigen Kontaktierung einer Schiene des Verschienungssystems vorgesehen ist. Erfindungsgemäss ist der Körper einstückig ausgebildet, wodurch der Körper vorteilhaft eine sehr hohe mechanische Stabilität in sich aufweist, so dass mechanische Einwirkungen, die beispielsweise im Stromstossfall einer stromführenden und auf der Aufnahmefläche aufliegenden Schiene, die eng an einer anderen Schiene oder nahe dem Erdpotential geführt ist, den Isolator nahezu unbeeinflusst lassen. Teilentladungen am und im Körper sowie Überschläge zwischen Schienen oder zwischen einer Schiene und dem Erdpotential können so erfolgreich verhindert werden, so dass der Isolator ein hohes Mass an Isolationsvermögen aufweist.

Desweiteren erstreckt sich erfindungsgemäss zwischen dem Loch und der Aufnahmefläche eine im wesentlichen gerippte erste Fläche in radialer Richtung. Eine üblicherweise vorgesehene Aussparung einer auf der Aufnahmefläche aufliegenden Schiene kann vorteilhaft klein gewählt werden, da die für die Isolation notwendige Kriechstrecke zwischen der aufliegenden Schiene und einer gängigerweise durch das Loch verlaufende Erdpotentialschiene über die gerippte erste Fläche erreicht ist. Dadurch können die Stirnseiten des Körpers des Isolators und die aufliegende Schiene flächenmässig sehr platzsparend und damit kostengünstig dimensioniert werden, insbesondere bei einer hohen über eine solche Schiene zu übertragenden Leistung. Weiterhin kann dadurch ein leichter, mit wenig Material auskommender und damit kostengünstiger Isolator erreicht werden.

Beim erfindungsgemässen Isolatorsystem sind mindestens zwei erfindungsgemässe Isolatoren vorgesehen, deren Körper in Symmetrieachsrichtung fluchtend angeordnet sind und einen Stapel bilden. Ferner sind zwei benachbarte Körper an jeweils einer ihrer Aufnahmeflächen gegen eine zwischen den beiden Körpern angeordnete Schiene gepresst. Dadurch entsteht ein äusserst kompakter Verbund der Isolatoren des Isolatorsystems, das eine hohe Stabilität in sich aufweist und nahezu resistent gegenüber mechanischen Einwirkungen ist. Darüber hinaus kann durch die fluchtend angeordneten Körper der Isolatoren ein sehr platzsparender Aufbau des Isolatorsystems erzielt werden. Ferner kann die erste Fläche eines jeden Körpers des zugehörigen Isolators vorteilhaft gegen Verschmutzung und Umwelteinflüsse geschützt werden.

Diese und weitere Aufgaben und Vorteile der vorliegenden Erfindung werden aus der nachfolgenden detaillierten Beschreibung bevorzugter Ausführungsbeispiele der Erfindung in Verbindung mit der Zeichnung offensichtlich.

### Kurze Beschreibung der Zeichnung

Es zeigen:
- Fig. 1: eine Schnittdarstellung einer Ausführungsform eines erfindungsgemässen Isolators für ein elektrisches Verschienungssystem,
- Fig. 2: den erfindungsgemässen Isolator in der Aufsicht und
- Fig. 3: eine Halbschnittdarstellung einer Ausführungsform eines erfindungsgemässen Isolatorsystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

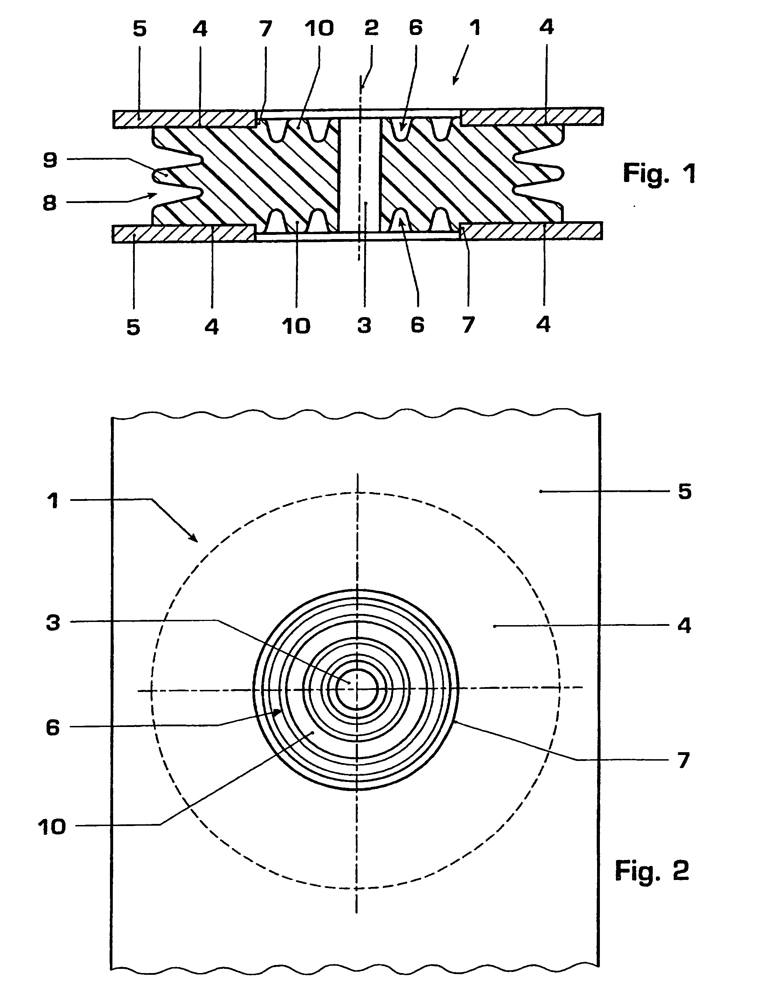

In Fig. 1 ist eine Schnittdarstellung einer Ausführungsform eines erfindungsgemässen Isolators für ein elektrisches Verschienungssystem mit mindestens einer Schiene 5 gezeigt.

Der erfindungsgemässe Isolator weist gemäss Fig.1 einen Körper 1 auf, der bezüglich einer Symmetrieachse 2 axialsymmetrisch ausgebildet ist. Der Körper 1 weist ein längs dieser Symmetrieachse 2 geführtes Loch 3 auf, durch welches gängigerweise eine der Übersichtlichkeit halber nicht dargestellte Erdpotentialschiene verläuft. Weiterhin ist bezüglich der Symmetrieachse jeweils an Stirnseiten des Körpers 1 eine zu dem Loch 3 senkrecht beabstandete und sich radial bis zum Randbereich des Körpers 1 erstreckende Aufnahmefläche 4 vorgesehen. Diese Aufnahmefläche 4 dient der flächigen Kontaktierung einer Schiene 5 eines elektrischen Verschienungssystems. Gemäss Fig. 1 liegt an jeder Aufnahmefläche 4 des Körpers 1 eine solche Schiene 5 auf, die als eine im wesentlichen plattenförmige Schiene 5 ausgeführt ist, wobei die Schienen 5 bekanntermassen einen elektrischen Strom führen und untereinander und gegenüber Erdpotential auf unterschiedlichen Spannungspotentialen liegen.

Erfindungsgemäss ist der Körper 1 gemäss Fig. 1 einstückig ausgebildet, wodurch der Körper 1 vorteilhaft eine sehr hohe mechanische Stabilität in sich aufweist. Mechanische Einwirkungen, die in einem rauen Einsatzumfeld des Isolators auftreten können, haben damit auf den Isolator nahezu keinen Einfluss. Weiterhin ist der Isolator weitestgehend resistent gegen mechanische Einwirkungen, die beispielsweise im Stromstossfall einer stromführenden und eng an einer anderen oder nahe dem Erdpotential geführten Schiene 5 auftreten können.

Erfindungsgemäss erstreckt sich gemäss Fig. 1 und nach einer Aufsichtdarstellung des erfindungsgemässen Isolators gemäss Fig. 2 zwischen dem Loch 3 und der Aufnahmefläche 4 eine im wesentlichen gerippte erste Fläche 6 in radialer Richtung. Vorzugsweise weisen die Rippen 10 der ersten Fläche 6 jeweils einen im wesentlichen trapezförmigen Querschnitt auf. Eine gemäss Fig. 1 und Fig. 2 vorgesehene Aussparung der auf der Aufnahmefläche 4 aufliegenden Schiene 5 kann dadurch vorteilhaft klein gewählt werden, da die Kriechstrekke, welche für die Isolation zwischen der Schiene 5 und der der Übersichtlichkeit halber nicht gezeigten durch das Loch 3 verlaufenden Erdpotentialschiene notwendig ist, mittels der im wesentlichen gerippten ersten Fläche 6 erzielt ist. Dadurch lässt sich der Isolator und die Schiene 5 sehr platzsparend ausführen, da die Stirnseiten des Körpers 1 und die Schiene 5 flächenmässig weniger gross gegenüber den aus dem Stand der Technik bekannten Ausführungsformen, insbesondere bei einer hohen über die Schiene 5 zu übertragenden Leistung, dimensioniert werden müssen.

Bei der in Fig. 1 und Fig. 2 gezeigten Ausführungsform des erfindungsgemässen Isolators ist der Körper 1 rotationssymmetrisch bezüglich der Symmetrieachse 2, insbesondere mit einem kreisförmigen Querschnitt, ausgeführt. Der Übergang von der ersten Fläche 6 zur Aufnahmefläche 4 ist gemäss Fig. 1 als Stufe 7 ausgebildet, welche von der ersten Fläche 6 zu der Aufnahmefläche 4 hin abfällt. Da die in Fig. 2 dargestellte erste Fläche 6 vorzugsweise kreisförmig ausgeführt ist, ist der als Stufe 7 zur Aufnahmefläche 4 hin ausgebildete Übergang ebenfalls kreisförmig ausgeführt. Die auf der Aufnahmefläche 4 aufliegende Schiene 5 liegt gemäss Fig. 1 an einer Kante ihrer Aussparung an der Stufe 7 an, wobei die Aussparung vorteilhaft im wesentlichen dieselben Abmessungen wie die erste Fläche 6 aufweist. Somit wird ein Verschieben der Schiene 5 quer zur Symmetrieachsrichtung durch die vorstehend erwähnten eventuell möglichen mechanischen Einwirkungen vermieden. Weiterhin kann die Montage vorteilhaft erleichtert werden.

Zur Isolation der Schienen 5 gegeneinander in Symmetrieachsrichtung weist eine auf die Symmetrieachse 2 bezogene Mantelfläche des Körpers 1 erfindungsgemäss eine im wesentlichen gerippte zweite Fläche 8 auf. Vorzugsweise weisen die Rippen 9 der zweiten Fläche 8 jeweils einen im wesentlichen dreieckförmigen Querschnitt auf. Die zweite Fläche 8 ist vorteilhaft in Symmetrieachsrichtung durch die Aufnahmeflächen 4 begrenzt. Der Abstand der Schienen 5 in Symmetrieachsrichtung kann somit verkleinert werden, da die Kriechstrecke, welche für die Isolation zwischen den Schienen 5 notwendig ist, mittels der im wesentlichen gerippten zweiten Fläche 8 erzielt ist. Dadurch lässt sich der Isolator in Symmetrieachsrichtung vorteilhaft sehr platzsparend ausführen, wobei zusätzlich Gewicht, Material und damit Kosten eingespart werden können.

Der Körper 1 des erfindungsgemässen Isolators ist, wie bereits vorstehend erwähnt, einstückig ausgebildet. Erfindungsgemäss ist der Körper 1 aus einem giessfähigen Isolationsmaterial aufgebaut, wodurch die vorteilhafte Einstückigkeit des Körpers 1 besonders einfach erreicht werden kann. Zudem lassen sich die erste Fläche 6 und zweite Fläche 8, insbesondere deren Rippen 8, 9 durch Giessen eines giessfähigen Isolationsmaterials problemlos realisieren, ohne dass eine spanende Bearbeitung wie insbesondere Drehen oder Schleifen nötig ist.

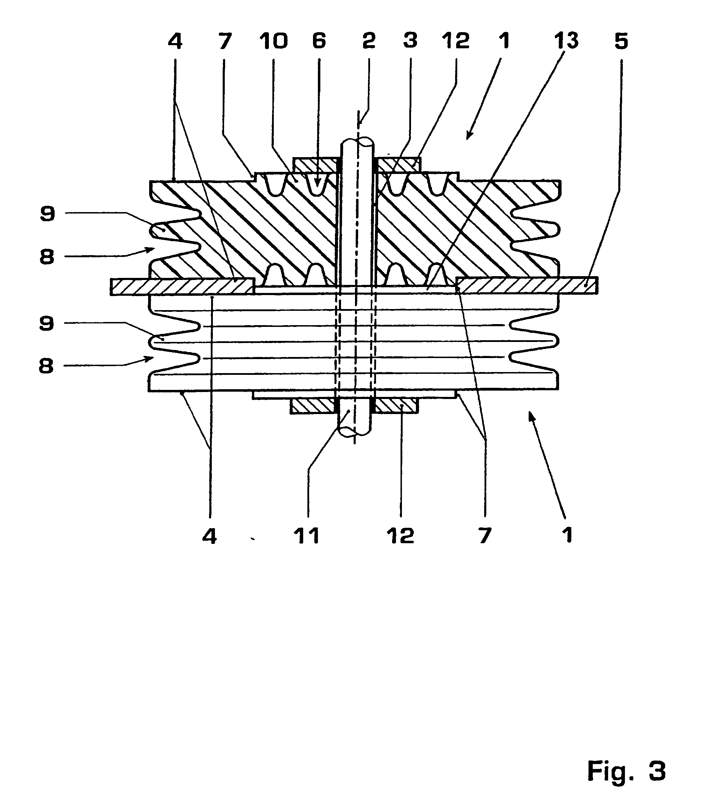

In Fig. 3 ist eine Halbschnittdarstellung einer Ausführungsform eines erfindungsgemässen Isolatorsystems gezeigt. Beim erfindungsgemässen Isolatorsystem gemäss Fig. 3 sind mindestens zwei erfindungsgemässe Isolatoren vorgesehen, deren Körper 1 erfindungsgemäss in Symmetrieachsrichtung fluchtend angeordnet sind und einen Stapel bilden. Ferner sind zwei benachbarte Körper 1 an jeweils einer ihre Aufnahmeflächen 4 gegen eine zwischen den beiden Körpern 1 angeordnete Schiene 5 gepresst, die, wie bereits vorstehend beschrieben, der Ausführungsform der in Fig. 1 und Fig. 2 beschriebenen entspricht. Durch die Pressung entsteht ein äusserst kompakter Verbund der Isolatoren des Isolatorsystems, das eine hohe Stabilität in sich aufweist. Darüber hinaus kann durch die fluchtend angeordneten Körper 1 der Isolatoren ein sehr platzsparender Aufbau des Isolatorsystems erzielt werden. Bei der Verwendung einer entsprechend dicken Schiene 5, gegen die die beiden Körper 1 gepresst sind, ist zwischen den beiden benachbarten Körpern 1 ein Hohlraum 13 ausgebildet. Gemäss Fig. 3 ist der Hohlraum 13 in Symmetrieachsrichtung durch zwei der im wesentlichen gerippten ersten Flächen 6 der benachbarten Körper 1 begrenzt, wobei diese beiden ersten Flächen 6 einander zugewandt sind. Der Hohlraum 13 ist gegenüber Verschmutzung und Umwelteinflüssen abgeschlossen und schützt somit die einander zugewandten ersten Flächen 6 der benachbarten Körper 1 vor diesen Einflüssen. Weiterhin kann damit die erste Fläche 6 bezüglich ihrer Oberflächenrauheit für einen niedrigen Verschmutzungsgrad ausgelegt werden, so dass zusätzlich wesentliche Kosten, insbesondere Herstellungskosten eingespart werden können. Durch den Hohlraum 13 wird zusätzlich sichergestellt, dass die Presskraft ausschliesslich auf die jeweiligen Aufnahmeflächen 4 der zugehörigen Körper sowie auf die zwischen den Körpern 1 angeordnete Schiene 5 wirkt, so dass eine aufwendige Auslegung der ersten Fläche 6 zur Aufnahme dieser Presskraft vorteilhaft entfällt.

Ferner ist gemäss Fig. 3 ein Zugstab 11 vorgesehen, der durch die jeweiligen längs der Symmetrieachse 2 geführten Löcher 3 der zugehörigen Körper 1 geführt ist. An den Zugstabenden ausserhalb der Stirnseiten des Stapels ist eine Spanneinrichtung 12 angeordnet, die der Presskraftbeaufschlagung auf den Stapel der Körper 1 dient und einen sehr stabilen Verbund der Körper 1 mit der Schiene 5 erzielt. Der Zugstab 11 liegt auf Erdpotential, insbesondere wenn der Zugstab 11 zusätzlich zur Befestigung des Isolatorsystems in einer Stromrichterschaltung dient, und ist vorzugsweise aus einem nicht-magnetischem Material aufgebaut, so dass der Zugstab 11 durch die stromführende Schiene 5 nicht magnetisiert wird und somit vom Zugstab 11 ausgehende oder in dem Zugstab 11 erzeugte magnetische und induktive Wirkungen vorteilhaft vermieden werden können.

Erfindungsgemäss liegt die Spanneinrichtung 12 bezüglich der Symmetrieachse 2 an den Stirnseiten des Stapels der Körper 1 jeweils an der im wesentlichen gerippten ersten Fläche 6 des zugehörigen Körpers 1 auf. Durch dieses Aufliegen der Spanneinrichtung 12 wird ein Isolatorsystem erreicht, welches mit wenig Platz, insbesondere senkrecht zur Symmetrieachsrichtung, auskommt, da die Spanneinrichtung 12 sich senkrecht zur Symmetrieachsrichtung nicht bis zur Aufnahmefläche 4 oder über die Aufnahmefläche 4 hinaus oder über die Querschnittsfläche des Körpers 1 beziehungsweise des Stapels der Körper 1 hinaus streckt.

Insgesamt stellen der erfindungsgemässe Isolator und das erfindungsgemässe Isolatorsystem eine besonders einfache und damit kostengünstige und zuverlässig Lösung dar, die sich vor allem durch ihre robusten Aufbauten und durch ihre vorstehend beschriebene weitestgehende Resistenz auf mechanische Einwirkungen auszeichnet.

### Bezugszeichenliste

- 1: Körper
- 2: Symmetrieachse
- 3: Loch
- 4: Aufnahmefläche
- 5: Schiene
- 6: erste Fläche
- 7: Stufe
- 8: zweite Fläche
- 9: Rippen der zweiten Fläche
- 10: Rippen der ersten Fläche
- 11: Zugstab
- 12: Spanneinrichtung
- 13: Hohlraum

## Patentansprüche

1. Isolator für ein elektrisches Verschienungssystem mit mindestens einer Schiene (5), der als axialsymmetrischer Körper (1) ausgebildet ist und ein längs der Symmetrieachse (2) geführtes Loch (3) aufweist, wobei bezüglich der Symmetrieachse (2) jeweils an Stirnseiten des Körpers (1) eine zu dem Loch (3) senkrecht beabstandete und sich radial bis zum Randbereich des Körpers (1) erstreckende Aufnahmefläche (4) zur flächigen Kontaktierung einer Schiene (5) vorgesehen ist, **dadurch gekennzeichnet,**
**dass** der Körper (1) einstückig ausgebildet ist,
**dass** sich zwischen dem Loch (3) und der Aufnahmefläche (4) eine im wesentlichen gerippte erste Fläche (6) in radialer Richtung erstreckt, und
**dass** eine auf die Symmetrieachse (2) bezogene Mantelfläche des Körpers (1) eine im wesentlichen gerippte zweite Fläche (8) aufweist.

2. Isolator nach Anspruch 1, **dadurch gekennzeichnet, dass** der Übergang von der ersten Fläche (6) zur Aufnahmefläche (4) als Stufe (7) ausgebildet ist.

3. Isolator nach Anspruch 1 oder 2, **dadurch gekennzeichnet, dass** die im wesentlichen gerippte zweite Fläche (8) in Symmetrieachsrichtung durch die Aufnahmeflächen (4) begrenzt ist.

4. Isolator nach einem der vorhergehenden Ansprüche, **dadurch gekennzeichnet, dass** Rippen (9) der im wesentlichen gerippten zweiten Fläche (8) jeweils einen im wesentlichen dreiecksförmigen Querschnitt aufweisen.

5. Isolator nach einem der vorhergehenden Ansprüche, **dadurch gekennzeichnet, dass** Rippen (10) der im wesentlichen gerippten ersten Fläche (6) jeweils einen im wesentlichen trapezförmigen Querschnitt aufweisen.

6. Isolator nach einem der vorhergehenden Ansprüche, **dadurch gekennzeichnet, dass** der Körper (1) rotationssymmetrisch ausgebildet ist.

7. Isolator nach einem der vorhergehenden Ansprüche, dass der Körper (1) aus einem giessfähigen Isolationsmaterial aufgebaut ist.

8. Isolatorsystem mit mindestens zwei Isolatoren nach einem der Ansprüche 1 bis 7, **dadurch gekennzeichnet, dass** die Körper (1) der Isolatoren in Symmetrieachsrichtung fluchtend angeordnet sind und einen Stapel bilden, wobei zwei benachbarte Körper (1) an jeweils einer ihre Aufnahmeflächen (4) gegen eine zwischen den beiden Körpern (1) angeordnete Schiene (5) gepresst sind.

9. Isolatorsystem nach Anspruch 8, **dadurch gekennzeichnet, dass** zwischen zwei benachbarten Körpern (1) ein Hohlraum (13) ausgebildet ist und dass der Hohlraum (13) in Symmetrieachsrichtung durch zwei der im wesentlichen gerippten ersten Flächen (6) der benachbarten Körper (1) begrenzt ist, wobei die beiden ersten Flächen (6) einander zugewandt sind.

10. Isolatorsystem nach Anspruch 8 oder 9, **dadurch gekennzeichnet, dass** durch die jeweiligen Löcher (3) der zugehörigen Körper (1) ein Zugstab (11) geführt ist.

11. Isolatorsystem nach Anspruch 10, **dadurch gekennzeichnet, dass** der Zugstab (11) aus einem nicht-magnetischem Material aufgebaut ist.

12. Isolatorsystem nach Anspruch 10 oder 11, **dadurch gekennzeichnet, dass** an den Zugstabenden eine Spanneinrichtung (12) zur Presskraftbeaufschlagung auf den Stapel angeordnet ist, wobei die Spanneinrichtung (12) bezüglich der Symmetrieachse (2) an Stirnseiten des Stapels jeweils an der im wesentlichen gerippten ersten Fläche (6) des zugehörigen Körpers (1) aufliegt.

## Claims

1. Insulator for an electrical busbar system having at least one rail (5) which is in the form of an axially symmetrical body (1) and has a hole (3) along the axis of symmetry (2), with a mounting surface (4), which is vertically at a distance from the hole (3) and extends radially as far as the rim region of the body (1), being provided on each of the end faces of the body (1) with respect to the axis of symmetry (2), in order to make flat contact with a rail (5), **characterized in that** the body (1) is formed integrally,
**in that** an essentially ribbed first surface (6) extends in the radial direction between the hole (3) and the mounting surface (4), and
**in that** an outer surface of the body (1) with respect to the axis of symmetry (2) has an essentially ribbed second surface (8).

2. Insulator according to Claim 1, **characterized in that** the junction from the first surface (6) to the mounting surface (4) is in the form of a step (7).

3. Insulator according to Claim 1 or 2, **characterized in that** the essentially ribbed second surface (8) is bounded in the direction of the axis of symmetry by the mounting surfaces (4).

4. Insulator according to one of the preceding claims, **characterized in that** ribs (9) on the essentially ribbed second surface (8) each have an essentially triangular cross section.

5. Insulator according to one of the preceding claims, **characterized in that** ribs (10) on the essentially ribbed first surface (6) each have an essentially trapezoidal cross section.

6. Insulator according to one of the preceding claims, **characterized in that** the body (1) is rotationally symmetrical.

7. Insulator according to one of the preceding claims, **characterized in that** the body (1) is formed from an insulation material which can be poured or cast.

8. Insulator system having at least two insulators according to one of Claims 1 to 7, **characterized in that** the bodies (1) of the insulators are arranged to be aligned in the direction of the axis of symmetry and form a stack, with one of the mounting surfaces (4) of in each case two adjacent bodies (1) being pressed against a rail (5) which is arranged between the two bodies (1).

9. Insulator system according to Claim 8, **characterized in that** a cavity (13) is formed between two adjacent bodies (1), and **in that** the cavity (13) is bounded in the direction of the axis of symmetry by two of the essentially ribbed first surfaces (6) of the adjacent bodies (1), with the two first surfaces (6) facing one another.

10. Insulator system according to Claim 8 or 9, **characterized in that** a tie rod (11) is passed through the respective holes (3) and the associated bodies (1).

11. Insulator system according to Claim 10, **characterized in that** the tie rod (11) is composed of a nonmagnetic material.

12. Insulator system according to Claim 10 or 11, **characterized in that** a tightening device (12) for applying compression force to the stack is arranged at the tie rod ends, with the tightening device (12) resting, with respect to the axis of symmetry (2), on the end faces of the stack, in each case on the essentially ribbed first surface (6) of the associated body (1).

## Revendications

1. Isolateur pour un assemblage d'isolation électrique comprenant au moins un rail (5), qui est conçu comme un corps (1) axisymétrique et présente un trou (3) guidé le long de l'axe de symétrie (2), une surface de logement (4) espacée perpendiculairement au trou (3) et s'étendant radialement jusqu'à la zone périphérique du corps (1), pour le contact à plat d'un rail (5) étant prévue par rapport à l'axe de symétrie (2) respectivement sur les côtés avant du corps (1), **caractérisé en ce que**
le corps (1) est conçu d'une seule pièce,
une première surface (6) sensiblement nervurée s'étend dans le sens radial entre le trou (3) et la surface de logement (4), et
**en ce qu'**une surface d'enveloppe, spécifique à l'axe de symétrie (2), du corps (1) présente une seconde surface (8) sensiblement nervurée.

2. Isolateur selon la revendication 1, **caractérisé en ce que** le passage de la première surface (6) à la surface de logement (4) est conçu comme un niveau (7).

3. Isolateur selon la revendication 1 ou 2, **caractérisé en ce que** la seconde surface (8) sensiblement nervurée est délimitée dans la direction de l'axe de symétrie par les surfaces de logement (4).

4. Isolateur selon l'une quelconque des revendications précédentes, **caractérisé en ce que** des nervures (9) de la seconde surface (8) sensiblement nervurée présentent respectivement une section sensiblement de forme triangulaire.

5. Isolateur selon l'une quelconque des revendications précédentes, **caractérisé en ce que** des nervures (10) de la première surface (6) sensiblement nervurée présentent respectivement une section sensiblement en forme de trapèze.

6. Isolateur selon l'une quelconque des revendications précédentes, **caractérisé en ce que** le corps (1) est conçu de façon symétrique en rotation.

7. Isolateur selon l'une quelconque des revendications précédentes, **caractérisé en ce que** le corps (1) est conçu à base d'un matériau d'isolation coulable.

8. Assemblage d'isolation comprenant au moins deux isolateurs selon l'une quelconque des revendications 1 à 7, **caractérisé en ce que** les corps (1) des isolateurs sont disposés en alignement dans la direction de l'axe de symétrie et forment une pile, deux corps (1) voisins étant comprimés sur respectivement l'une de leurs surfaces de logement (4) contre un rail (5) disposé entre les deux corps (1).

9. Assemblage d'isolation selon la revendication 8, **caractérisé en ce qu'**une cavité (13) est conçue entre deux corps (1) voisins et **en ce que** la cavité (13) est délimitée dans la direction de l'axe de symétrie par deux premières surfaces (6) sensiblement nervurées des corps (1) voisins, les deux premières surfaces (6) étant tournées l'une vers l'autre.

10. Assemblage d'isolation selon la revendication 8 ou 9, **caractérisé en ce qu'**une barre de traction (11) est guidée à travers les trous (3) respectifs des corps (1) spécifiques.

11. Système d'isolation selon la revendication 10, **caractérisé en ce que** la barre de traction (11) est conçue à base d'un matériau non magnétique.

12. Système d'isolation selon la revendication 10 ou 11, **caractérisé en ce qu'**un système de serrage (12) pour la sollicitation de la force de compression sur la pile est disposé sur les extrémités de la barre de traction, le système de serrage (12) reposant par rapport à l'axe de symétrie (2) sur les côtés avant de la pile respectivement sur la première surface (6), largement nervurée, du corps (1) spécifique.
